# EUROPÄISCHE PATENTSCHRIFT

(11) **EP 1 353 098 B1**
(45) Veröffentlichungstag und Bekanntmachung des Hinweises auf die Patenterteilung: **24.05.2006**
(21) Anmeldenummer: 03005573.5
(22) Anmeldetag: 12.03.2003
(51) Int. Cl.: F16J 15/34, F16J 15/38

(54) **Gleitring-Dichtungsanordnung**
Mechanical seal arrangement
Garniture mécanique d'étanchéité

(30) Priorität: 08.04.2002 DE 20205419 U
(43) Veröffentlichungstag der Anmeldung: 15.10.2003
(73) Patentinhaber: Burgmann Dichtungswerke GmbH & Co. KG, 82515 Wolfratshausen (DE)
(72) Erfinder: Auer, Günther, 82538 Geretsried (DE); Bohrer, Anton, 82538 Geretsried (DE); Dechow, Frank, 67551 Worms (DE); Lejko, Helmut, 82538 Geretsried (DE); Portenlänger, Josef, 82544 Egling (DE)
(74) Vertreter: Schmidt, Horst

(56) Entgegenhaltungen:
- DE-A- 1 400 545
- DE-A- 3 507 819
- DE-U- 20 105 507

## Beschreibung

Die Erfindung betrifft eine Gleitring-Dichtungsanordnung mit Spülfunktion gemäss dem Oberbegriff des Patentanspruches 1.

Insbesondere bei steriltechnischen Anwendungen, z.B. in der Pharmaindustrie, werden doppelwirkende Gleitringdichtungsanordnungen bevorzugt, da diese sich vorteilhafterweise weitgehend frei von Spalten und Toträumen ausbilden lassen, in die das abzudichtende Produkt eindringen und sich absetzen kann. Die freie Beweglichkeit eines dem Produkt ausgesetzten befederten Gleitringes ist eine wichtige Voraussetzung für eine zuverlässige Abdichtung bei Stillstand der Betriebsanlage, als auch während deren Betriebes.

Die Erfindung betrifft insbesondere eine Gleitring-Dichtungsanordnung mit Mitteln zur Einführung eines Spülmediums in einen vom abzudichtenden Produkt beaufschlagten Bereich des befederten Gleitringes einer Gleitringpaarung, um daran kontinuierlich oder von Zeit zu Zeit eine reinigende Behandlung vornehmen zu können, die für die Aufrechterhaltung der Dichtfunktion wichtig ist. Ablagerungen auf Flächenbereichen der Dichtungsanordnung können insbesondere die Beweglichkeit des befederten Gleitringes relativ zu einem sekundären Dichtungselement beeinträchtigen.

Es wurde schon vorgeschlagen (Burgmann, ABC der Gleitringdichtung, Selbstverlag 1988, Seite 12) in einer das sekundäre Dichtungselement aufnehmenden Nut einen Abstreifring vorzusehen, der mit der abzudichtenden Oberfläche des befederten Gleitringes in Eingriff tritt, um dort sich eventuell abgesetzte Ablagerungen abzustreifen. Ein Nachteil dieser Anordnung ist, dass sie nur bei speziell auf den Abstreifring ausgelegten Nuten eingesetzt werden kann, und dass darüber hinaus der Abstreifring selbst sich auf die freie Beweglichkeit des befederten Gleitringes hindernd auswirken kann. Bekannt ist ferner (DE-U-20105507) eine Gleitringdichtungsanordnung mit Spülfunktion, bei der der befederte Gleitring der rotierende Gleitring ist und die Spülfunktion auf einen Bereich der Gleitringdichtungsanordnung eingeschränkt ist, der die Oberfläche des befederten Gleitringes nur indirekt, wenn überhaupt, reinigend tangieren kann. Eine ähnliche Spülwirkung wird bei einer anderen bekannten Gleitringdichtungsanordnung (DE-A-2727629) auf den befederten Gleitring ausgeübt, der in diesem Fall jedoch statonär angeordnet ist. Schliesslich ist es bekannt (DE-A-3507819), Fluidkanäle für ein Spülmedium nahe einer mit einem in einer Nut gehaltenen sekundären Dichtungselement in abdichtender Beziehung stehende Oberfläche eines befederten Gleitringes ausmünden zu lassen. Die Nut selbst kann vom Spülmedium nicht beaufschlagt werden, so dass in der Nut eingefangene Ablagerungen vom Spülfluid nicht wegtransportiert oder beseitigt werden können, was die bekannte Anordnung nicht nur nicht als zum Einsatz in steriltechnischen Anlagen geeignet erscheinen lässt, sondern auch die freie Beweglichkeit des befederten Gleitringes relativ zum sekundären Dichtungselement nur bedingt gewährleistet.

Der Erfindung liegt die Aufgabe zugrunde, eine Gleitringdichtungsanordnung der eingangs erwähnten Art mit verbesserter Spülwirkung und Eignung zum Einsatz in steriltechnischen Anlagen schaffen.

Diese Aufgabe wird durch die Merkmale des Patentanspruches 1 gelöst. Erfindungsgemäss ist eine Vielzahl von radialen Kanälen für ein Spülfluid vorgesehen, die unmittelbar an dem sekundären Dichtungselement ausmünden und daher nicht nur dieses und die Nut, in der das Dichtungselement aufgenommen ist, beaufschlagen können, sondern auch auf die benachbarte Oberfläche des befederten Gleitringes, mit dem das Dichtungselement zusammenwirkt, einen kräftigen Sprühstrahl aus dem Spülfluid richten können, um sowohl ein Eindringen des Produktes in die das Dichtungselement haltende Nut zu verhindern, als auch gebildete Ablagerungen auf der Oberfläche des Gleitringes bzw. Dichtungselementes zu entfernen oder nicht entstehen zu lassen. Vorzugsweise münden dabei die Kanäle einerends in einen abgedichteten Fluidraum aus, in den das Sperrfluid von aussen über eine Einspreisung eingeführt werden kann. Der Fluidraum hat Verteilerfunktion und ermöglicht eine gleichzeitige Versorgung einer grossen Anzahl an Kanälen mit dem Sperrdruckfluid. Das Spülfluid kann so auf das Produkt abgestimmt sein, dass durch Berührung mit dem Spülfluid keine unerwünschten Änderungen am Produkt eintreten. Beim Spülfluid kann es sich um eine Flüssigkeit oder um ein gasförmiges Medium handeln, je nachdem wie das abzudichtende Produkt beschaffen ist.

Obschon die Erfindung grundsätzlich bei befederten Gleitringen gleich welcher Art vorteilhaft anwendbar ist, ist gemäss einer bevorzugten Ausführungsform der Erfindung vorgesehen, dass die Kanäle am stationären Bauteil zum Zusammenwirken mit dem drehfesten Gleitring angeordent sind. Ein bevorzugtes Anwendungsgebiet der Erfindung ist daher bei doppelwirkenden Gleitringdichtungsanordnungen, bei denen der dem Produkt ausgesetzte Gleitring befedert und drehfest gehalten ist, so dass er lediglich eine axiale Bewegung vornehmen kann. Die Gefahr der Ablagerung von Fremdstoffen auf der dem Produkt ausgesetzten Oberfläche eines drehfesten Gleitringes ist ungleich höher als bei einem mit hoher Geschwindigkeit rotierenden Gleitring, da der Ablagerung entgegenwirkende Fliehkräfte nicht zum Zuge kommen.

Gemäss einer vorteilhaften Weiterbildung der Erfindung kann die Gleitringdichtungsanordnung als doppelwirkende oder Tandemanordnung mit einem Sperrfluidraum zwischen produktseitigen und produktabgewandten Gleitringpaarungen ausgebildet sein. Das Sperrfluid kann in diesem Fall herangezogen werden, um als Spülfluid zu dienen, indem ein Teil des Sperrfluides für diesen Zweck für das Spülfluid abgezweigt wird. In diesem Fall sind Massnahmen zu treffen, dass der Druck des Sperrfluides nicht unter den Druck des Spülfluides fällt.

Die Erfindung wird nachfolgend anhand von Ausführungsformen und der Zeichnung näher erläutert. Es zeigen:
- Fig. 1: in längsgeschnittener, teilweise schematischer Ansicht eine Gleitringdichtungsanordnung gemäss einer Ausführungsform der Erfindung, und
- Fig. 2: ein Detail A der Gleitringdichtungsanordnung nach Fig. 1 in vergrössertem Massstab, wobei Fig. 2A bis 2C verschiedene Ausgestaltungen von radialen Kanälen für die Spülfluidzufuhr zeigen.

Obschon ein Hauptanwendungsgebiet der Erfindung die Abdichtung von Wellen bei steriltechnischen Anlagen und Gerätschaften ist, kann die Erfindung vorteilhaft auch für andere Anwendungen eingesetzt werden, bei denen die ungehinderte Beweglichkeit eines sekundären Dichtungselementes einer Gleitringdichtungsanordnung unter den jeweiligen Betriebsbedingungen gewährleistet werden muss. Ferner kann die Erfindung zum Einsatz in Verbindung sowohl mit flüssigen als auch gasförmigen Medien kommen.

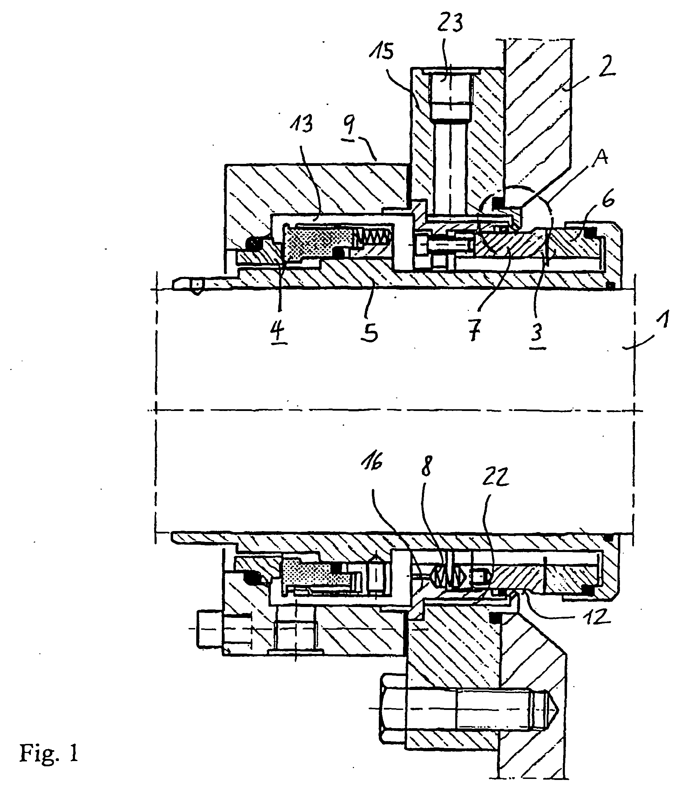

In Fig. 1 trägt die Welle das Bezugszeichen 1 und ein eine Durchtrittsöffnung für die Welle 1 definierender Bereich eines Gehäuses einer Gerätschaft (nicht gezeigt), z.B. einer Pumpe oder eines Rührwerkes, das Bezugszeichen 2. Die Gleitring-Dichtungsanordnung ist vorgesehen, um die Welle 1 gegenüber dem Gehäuse 2 im Bereich der Durchtrittsöffnung abzudichten.

Die Gleitring-Dichtungsanordnung ist vorzugsweise als doppeltwirkende oder Tandem Anordnung mit einer produktseitigen Gleitringpaarung 3 und einer produktabgewandten Gleitringpaarung 4 ausgebildet. Im Zusammenhang mit der vorliegenden Erfindung ist die produktabgewandte Gleitringpaarung 4 von untergeordnetem Interesse und wird daher im folgenden nicht näher beschrieben. Sie kann deshalb einen herkömmlichen Aufbau haben, wie er dem Fachmann bekannt ist.

Die produktseitige Gleitringpaarung 3 umfasst einen auf einer Wellenbuchse 5 zur gemeinsamen Drehung mit der Welle 1 angeordneten Gleitring 6. Der Gleitring 6 wirkt mit einem Gleitring 7 zusammen, der drehfest am Gehäuse 2 gehalten ist. Eine Vorspanneinrichtung, z.B. in Gestalt von einem Paar oder mehreren umfänglich verteilt angeordneten Vorspannfedern 8, stützt sich mit einem axialen Ende an einem am Gehäuse 2 montierten, vorzugsweise mehrteiligen Dichtungsgehäuse 9 und am anderen axialen Ende am drehfesten Gleitring 7 ab und hat die Aufgabe, den drehfesten Gleitring 7 mit einer axialen Vorspannkraft zu beaufschlagen und axial gegen den rotierenden Gleitring 6 vorzuspannen. Der drehfeste Gleitring 7 ist zu diesem Zweck axial beweglich am Dichtungsgehäuse 9 gehalten.

In einem durch die Gleitringpaarungen 3, 4, das Dichtungsgehäuse 9 und die Buchse 5 umgrenzten Fluidraum 13 kann ein, vorzugsweise inertes, Sperrdruckfluid über eine nicht gezeigte Einspeisung eingeführt werden. Die Einspeisung kann mit einer externen Sperrdruckfluid-Vorratsquelle (nicht gezeigt) in Verbindung stehen. Bezüglich weiterer Details zu sperrfluidbeaufschlagten, doppelwirkenden Gleitring-Dichtungsanordnungen kann im Übrigen auf BURGMANN ABC der Gleitringrichtung, a.a.O., S. 224 ff verwiesen werden.

Ein Sekundärdichtungselement 10, das in Gestalt eines O-Ringes ausgebildet sein kann, ist in einer Nut 11 eines Unterabschnittes 16 des Dichtungsgehäuses 9 vorgesehen, in dem der Gleitring 7 axial beweglich gehalten ist. Das Sekundärdichtungselement 10 steht in dichtendem Eingriff mit einer äusseren Umfangsfläche 12 des Gleitringes 7, um zwischen diesem und dem Gehäuseunterabschnitt 16 eine dichtende Beziehung zu schaffen und dadurch das abzudichtende Medium (Produkt) an einem Eindringen in den Fluidraum 13 zu hindern. Der Abschnitt der Umfangsfläche 12 des Gleitringes 7 produktseitig des Sekundärdichtungselementes 10 steht in Berührung mit dem Produkt und kann daher durch das Produkt verschmutzend belastet werden.

Für die Funktion des Sekundärdichtungselementes 10 und der Vorspanneinrichtung 8 ist es wichtig, dass die axiale Beweglichkeit des Gleitringes 7 aufrechterhalten bleibt und nicht durch Ablagerungen, z.B. Ausfällungen des abzudichtenden Produktes an der Umfangsfläche 12 des drehfesten Gleitringes 7 beeinträchtigt wird. Derartige Ablagerungen würden eine Bewegung des Gleitringes 7 längs des Sekundärdichtungselementes 10 verhindern oder wenigstens beeinträchtigen. Das Sekundärdichtungselement 10 ist innerhalb der Nut 11 zwischen axialen Anschlagflächen 17, 18 axial beweglich, von denen eine (in der Zeichnung die linksseitige Anschlagfläche 17) am Gehäuseunterabschnitt 16 vorgesehen ist. Die andere Anschlagfläche 18 wird durch eine nahe der Nut 11 oder daran unmittelbar angrenzende Stirnfläche eines axialen Anschlagbereiches 21 gebildet, der über einen radialen Armbereich 20 mit einem Flanschabschnitt 15 des Dichtungsgehäuses 9 verbunden ist. Zwischen dem Gehäuseflanschabschnitt 15 und dem Gehäuseunterabschnitt 16 ist ein einerends durch den radialen Armbereich 20 axial begrenzter weiterer Fluidraum 22 gebildet, in den über eine Einspeisung 23 im Gehäuseflanschabschnitt 15 ein Spüldruckfluid eingeführt werden kann. Der Spülfluidraum 22 ist gegenüber dem Sperrfluidraum 13 abgedichtet, so dass sich das Spülfluid vom Sperrfluid, wenn erwünscht, unterscheiden kann, und insbesondere beide Fluide unter einem unterschiedlichen Druck gesetzt werden können.

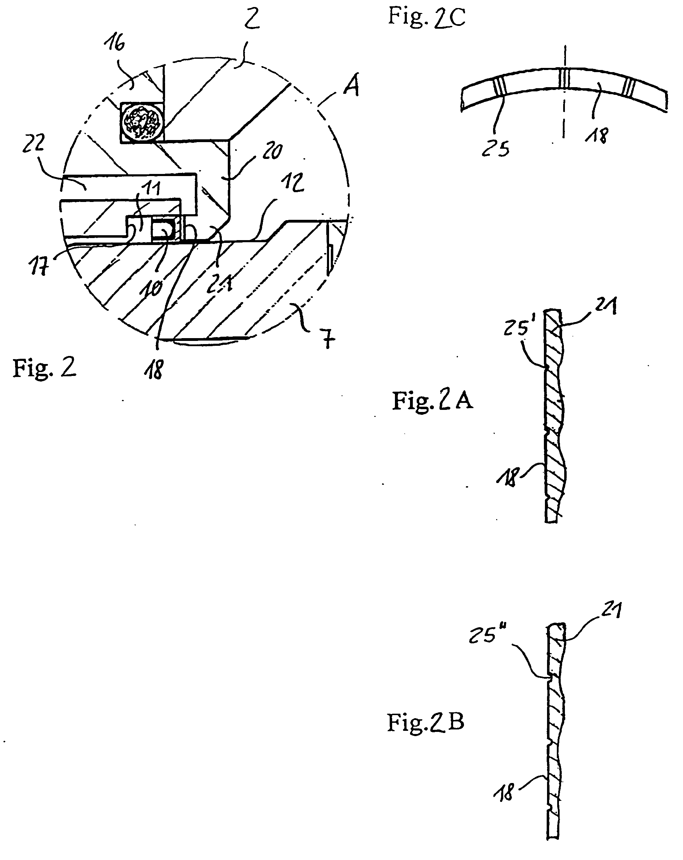

Fig. 2 und 2A bis 2C zeigen verschiedene Modifikationen der Mittel zum Aufstrahlen des Spülfluids auf die Umfangsfläche 12 des drehfesten Gleitringes 7. Gemeinsames Merkmal dieser modifizierten Ausführungsformen ist, dass in der Anschlagfläche 18 des Anschlagbereiches 21 eine Vielzahl umfänglich verteilt angeordnete gegen die Nut 11 offene radiale Kanäle 25 eingebracht sind, die einerends am Fluidraum 22 und anderenends an der Umfangsfläche 12 ausmünden. Die Kanäle 25 können bei Betrieb wenigstens teilweise durch das an der Anschlagfläche 18 anliegende Dichtungselement 10 abgedeckt werden und wirken wie Düsen, um das Spülfluid gegen die Umfangsfläche 12 unmittelbar nahe dem Dichtungselement 10 zu richten. Nach Fig. 2A können die Kanäle 25 radiale Einkerbungen 25' mit einem dreieckförmigen Querschnitt sein. Sie können jedoch auch, wie Fig. 2B zeigt, Nuten 25" mit halbkreisförmigem Querschnitt darstellen. Ferner können, wie Fig. 2C zeigt, zwei oder mehrere Kanäle 25 zu einer Gruppe eng aneinanderliegend zusammengefasst sein, wobei eine Vielzahl derartiger Gruppen umfänglich verteilt angeordnet sein kann.

Das Spülfluid sollte den Kanälen 25 mit einem Druck zugeführt werden, der wenigstens gleich, vorzugsweise höher als der Druck des abzudichtenden Produktes ist. Das Spülfluid kann unterschiedlich zum Sperrfluid sein und beide Fluide können von unterschiedlichen Vorratsquellen stammen. Beide Fluide können jedoch auch übereinstimmen. In diesem Fall kann vorgesehen sein, dass eine Fraktion des Sperrfluides aus dem Fluidraum 13 oder der diesbezüglichen Vorratsquelle abgezweigt und in den Fluidraum 22 zur Beaufschlagung der Kanäle 25 eingeführt wird. Dabei sollte der Druck des Fluids im Fluidraum 13 wenigstens gleich, vorzugsweise höher als der des Fluids im Fluidraum 22 sein. Diese kann vorteilhafterweise durch eine Drosselung bei der Einspeisung des Fluids in den Fluidraum 22 erreicht werden. Die Fluidräume 13, 22 könnten auch über eine den Gehäuseunterabschnitt 16 durchsetzende Drosselbohrung miteinander in Verbindung stehen. In diesem Fall könnte die Einspeisung 23 für das Spülfluid entfallen.

Je nach der Beschaffenheit des abzudichtenden Produktes kann es sich bei den Spül- und Sperrfluiden um Gase oder Flüssigkeiten handeln. In der Dichtfläche eines oder beider zusammenwirkender Gleitringe 6, 7 können förderwirksame Ausnehmungen eingebracht sein, um die Bildung eines Dichtspaltes zwischen diesen Flächen zu fördern. Das Dichtungselement 10 kann ausser in Gestalt eines O-Ringes als Ring mit einem U-förmigen Querschnitt aus einem geeigneten Material wie PTFE oder dgl. ausgebildet sein.

## Patentansprüche

1. Gleitring-Dichtungsanordnung mit wenigstens einem Paar zusammenwirkender Gleitringe (6,7), von denen einer drehfest an einem stationären Bauteil (9) und der andere zur gemeinsamen Drehung mit einem rotierenden Bauteil (1,5) montiert ist, und von denen einer axial beweglich ist, wobei zwischen dem axial beweglichen Gleitring und dem zugehörigen Bauteil ein Sekundärdichtungselement (10) vorgesehen ist, das an dem betreffenden Bauteil in einer Nut (11) mit axialen Anschlagflächen (17,18) angeordnet ist, von denen eine (18) dem abzudichtenden Medium zugewandt ist, und mit einer Einrichtung zum Freihalten eines mit dem Sekundärdichtungselement in dichtender Beziehung stehenden Flächenbereiches (12) des axial beweglichen Gleitrings von Fremdstoffen, welche Freihalteeinrichtung eine Vielzahl von an oder nahe bei dem durch das Sekundärdichtungselement (10) abgedichteten Flächenbereich (12) des axial beweglichen Gleitrings (7) ausmündenden Fluidauslässen (25) umfasst, denen ein Spüldruckfluid mit einem Druck grösser oder gleich dem Druck des abzudichtenden Mediums zuführbar ist, um den Flächenbereich des axial beweglichen Gleitrings mit dem Spüldruckfluid zu beaufschlagen, **dadurch gekennzeichnet, dass** die Fluidauslässe in der dem abzudichtenden Medium zugewandten Anschlagfläche (18) für das Sekundärdichtungselement (10) eingebrachte, gegen die Nut (11) offene radiale Kanäle (25) umfasst.

2. Gleitring-Dichtungsanordnung nach Anspruch 1, **dadurch gekennzeichnet, dass** die Kanäle (25) einerends in einen abgedichteten Fluidraum (22) ausmünden, in den das Sperrfluid einführbar ist.

3. Gleitring-Dichtungsanordnung nach Anspruch 1 oder 2, **dadurch gekennzeichnet, dass** die Kanäle (25) durch Einkerbungen mit dreieck- oder halbkreisförmigem Querschnitt in der Anschlagfläche (18) gebildet sind.

4. Gleitring-Dichtungsanordnung nach Anspruch 1, 2 oder 3, **dadurch gekennzeichnet, dass** zwei oder mehrere eng aneinander liegende Kanäle (25) eine Gruppe bilden, wobei eine Vielzahl von Gruppen umfänglich verteilt an der Anschlagfläche (18) vorgesehen sind.

5. Gleitring-Dichtungsanordnung nach einem der vorhergehenden Ansprüche, **dadurch gekennzeichnet, dass** die Kanäle (25) am stationären Bauteil (9) zum Zusammenwirken mit dem drehfesten Gleitring (7) vorgesehen sind.

6. Gleitring-Dichtungsanordnung nach einem der vorhergehenden Ansprüche, mit zwei Paaren von zusammenwirkenden Gleitringen, die zwischen sich einen mit einem Sperrdruckfluid beaufschlagbaren Fluidraum (13) einschliessen, **dadurch gekennzeichnet, dass** das Spüldruckfluid unter einen Druck kleiner oder gleich dem Druck des Sperrdruckfluides setzbar ist.

7. Gleitring-Dichtungsanordnung nach Anspruch 3, **dadurch gekennzeichnet, dass** das Spüldruckfluid von einem Beaufschlagungssystem für ein Sperrdruckfluid abgezweigt ist.

## Claims

1. A mechanical face seal device comprising at least a pair of cooperating seal rings (6, 7) of which one is mounted on a stationary component (9) in non-rotatable manner and the other one is mounted for rotation in common with a rotary component (1,5), and of which one is axially moveable, whereby a secondary seal element (10) is provided between the axially moveable seal ring and the associated component, said secondary seal element is arranged in a groove (11) provided in the component concerned and having axial stop faces (17, 8), one of said stop faces (18) facing the medium requiring sealing, and a means for keeping a surface portion (12) of the axially moveable seal ring that is in sealing relationship with the secondary seal element free of foreign matter, said free-keeping means comprising a plurality of fluid discharge openings (25) which open out at or near the surface portion (12) of the axially moveable seal ring (7) that is sealed by the secondary seal element (10) and to which a pressurised flushing fluid having a pressure greater than or equal to the pressure of the medium requiring sealing is adapted to be supplied in order to apply the pressurised flushing fluid to the surface portion of the axially moveable seal ring, **characterized in that** the fluid discharge openings comprise radial channels (25) formed in said stop face (18) for the secondary seal element (10) facing the medium requiring sealing, said channels open towards the groove (11).

2. The mechanical face seal device according to claim 1, **characterized in that**, at one end thereof, the channels (25) open into a sealed fluid chamber (22) into which the buffer fluid is adapted to be introduced.

3. The mechanical face seal device according to claim 1 or 2, **characterized** that the channels (25) are formed in the stop face (18) by notches having a triangular or semicircular cross section.

4. The mechanical face seal device according to claim 1, 2 or 3, **characterized in that** two or more closely located channels (25) form a group, whereby a plurality of peripherally distributed groups are provided on the stop face (18).

5. The mechanical face seal device according to any of the preceding claims, **characterized in that** the channels (25) are provided on the stationary component (9) for cooperating with the non-rotatable seal ring (7).

6. The mechanical face seal device according to any of the preceding claims, comprising two pairs of cooperating seal rings delimiting between each other a fluid chamber (13) adapted to be exposed to a pressurised buffer fluid, **characterized in that** the pressurised flushing fluid is adapted to be set at a pressure which is lower than or equal to the pressure of the pressurised buffer fluid.

7. The mechanical face seal device according to claim 3, **characterized in that** the pressurised flushing fluid is branched off from an application system for a pressurised buffer fluid.

## Revendications

1. Système d'étanchéité à anneaux glissants comprenant au moins une paire d'anneaux glissants (6, 7) coopérant entre eux, dont l'un est monté sur une pièce fixe (9) de façon à ne pas pouvoir tourner et dont l'autre est monté sur une pièce rotative (1, 5) de façon à en être solidaire en rotation, et dont l'un est mobile axialement, sachant qu'entre l'anneau glissant mobile axialement et la pièce qui lui est associée est prévu un élément d'étanchéité secondaire (10) qui est placé sur la pièce concernée dans une rainure (11) comprenant des surfaces de butée (17,18) dont l'une (18) est tournée vers le fluide à contenir de façon étanche, comprenant également un dispositif pour garder exempte de substances étrangères une zone de surface (12) de l'anneau glissant mobile axialement qui est en relation avec l'élément d'étanchéité secondaire de façon à réaliser l'étanchéité, lequel dispositif comprenant de nombreuses sorties de fluide (25) débouchant au niveau ou à proximité de la zone de surface (12) de l'anneau glissant (7) mobile axialement qui est étanchée par l'élément d'étanchéité secondaire (10), lesquelles sorties peuvent être alimentées en fluide de nettoyage à une pression supérieure ou égale à la pression du fluide à contenir de manière étanche, afin de solliciter la zone de surface de l'anneau glissant mobile axialement avec le fluide de nettoyage sous pression, **caractérisé en ce que** les sorties de fluide comprennent des canaux radiaux (25) ménagés dans la surface de butée (18) pour l'élément d'étanchéité secondaire (10) qui est tournée vers le fluide à contenir de façon étanche et ouverts en direction de la rainure (11).

2. Système d'étanchéité à anneaux glissants selon la revendication 1, **caractérisé en ce que** les canaux (25) débouchent à une extrémité dans un espace étanche (22) pouvant renfermer le fluide d'arrêt.

3. Système d'étanchéité à anneaux glissants selon la revendication 1 ou 2, **caractérisé en ce que** les canaux (25) sont formés par des encoches de section transversale triangulaire ou semi-circulaire pratiquées dans la surface de butée (18).

4. Système d'étanchéité à anneaux glissants selon la revendication 1, 2 ou 3, **caractérisé en ce que** deux canaux (25) ou plus situés très près l'un de l'autre forment un groupe, de nombreux groupes étant prévus, qui sont répartis sur le pourtour de la surface de butée (18).

5. Système d'étanchéité à anneaux glissants selon l'une des revendications précédentes, **caractérisé en ce que** les canaux (25) sont prévus sur la pièce fixe (9) pour coopérer avec l'anneau glissant fixe en rotation (7).

6. Système d'étanchéité à anneaux glissants selon l'une des revendications précédentes, comprenant deux paires d'anneaux glissants coopérant entre eux qui forment un espace (13) pouvant être sollicité par un fluide d'arrêt sous pression, **caractérisé en ce que** le fluide de nettoyage sous pression peut être soumis à une pression inférieure ou égale à la pression du fluide d'arrêt sous pression.

7. Système d'étanchéité à anneaux glissants selon la revendication 3, **caractérisé en ce que** le fluide de nettoyage sous pression est dérivé d'un système d'amenée ou d'alimentation pour un fluide d'arrêt sous pression.
